# EUROPÄISCHE PATENTSCHRIFT

(11) **EP 1 497 207 B1**
(45) Veröffentlichungstag und Bekanntmachung des Hinweises auf die Patenterteilung: **22.03.2006**
(21) Anmeldenummer: 03746832.9
(22) Anmeldetag: 17.04.2003
(51) Int. Cl.: B65G 27/32

(54) **VORRICHTUNG ZUM VERSTELLEN DER NEIGUNG EINER SCHWINGRINNE**
DEVICE FOR ADJUSTING THE INCLINATION OF A VIBRATING CONVEYOR
DISPOSITIF POUR REGLER L'INCLINAISON D'UNE GOULOTTE VIBRANTE

(30) Priorität: 19.04.2002 DE 10217604
(43) Veröffentlichungstag der Anmeldung: 19.01.2005
(73) Patentinhaber: Garvens Automation GmbH, 31180 Giesen (DE)
(72) Erfinder: BERGER, Hermann, 31079 Adenstedt (DE)
(74) Vertreter: Leinweber & Zimmermann
(86) Internationale Anmeldenummer: PCT/EP2003/004081
(87) Internationale Veröffentlichungsnummer: WO 2003/089342

(56) Entgegenhaltungen:
- US-A- 2 337 174
- US-A- 4 724 949
- US-A- 5 967 294

## Beschreibung

Die Erfindung betrifft eine Vorrichtung zum Verstellen der Neigung einer von einem Schwingantrieb antreibbaren Schwingrinne, insbesondere für Teilmengenwaagen, mit einem an dem Schwingantrieb angeordneten Schwingrinnenträger.

Eine eine derartige Schwingrinne aufweisende Teilmengenwaage bzw. Kombinationswaage wird beispielsweise in der OE 3 111 811 C2 beschrieben. Bei dieser Teilmengenwaage werden Gegenstände über einen sich drehenden konusförmigen Verteiler auf in Kreisform unter dem Verteiler radial von diesem abstehend angeordnete Schwingrinnen verteilt. Diese Schwingrinnen sind bezüglich der vom Verteiler wegweisenden Richtungen abfallend geneigt und werden durch Schwingantriebe in Schwingung versetzt. Dadurch werden den der Schwingrinne von dem Verteiler zugeführten Gegenständen Beschleunigungen erteilt, wodurch Massenkräfte hervorgerufen werden, die für die Förderung der Gegenstände entlang der Schwingrinne ausgenutzt werden. Die Gegenstände werden dabei in Richtung der abfallenden Neigung der Schwingrinne radial nach außen bis zum Ende der Schwingrinne gefördert, von wo sie über einen Sammeltrichter in einen Wiegetrichter fallen. Die über die jeweiligen Schwingrinnen in den verschiedenen Wiegetrichtern angesammelten Teilmengen der Gegenstände werden daraufhin gewogen, worauf eine geeignete, ein vorgegebenes Gesamlgewicht ergebene Kombination der Inhalte verschiedener Wiegetrichter ermittelt wird. Diese ermittelte Kombination der Wiegetrichterinhalte wird dann über einen Sammeltrichter in einen Sammelbehälter abgefüllt.

Die bekannte Vorrichtung mit einer fest eingestellten Schwingrinnenneigung weist allerdings eine Reihe von Nachteilen auf. Sie funktioniert nämlich nur für Gegenstände mit einem bestimmten Reibungskoeffizienten. So sind etwa eine relativ geringe Neigung aufweisende Schwingrinnen lediglich zum Transport von Gegenständen mit geringem Reibungskoeffizienten, wie etwa Schrauben, geeignet. Gegenstände mit größeren Reibungskoeffizienten, wie etwa essbare Fruchtgummis, rutschen trotz der Rüttelbewegung nicht auf der Schwingrinne entlang. Dazu müßten die Schwingrinnen einen höheren Neigungswinkel aufweisen. Dabei würden aber wiederum die Gegenstände mit geringem Reibungskoeffizienten bereits ohne Rüttelbewegung auf der Rinne abrutschen, was aber verhindert werden soll. Die vorbekannten, auf Gegenstände eines bestimmten Reibungskoeffizienten abgestimmte Teilmengenwaagen müssen bei der Umrüstung auf Gegenstände mit einem anderen Reibungskoeffizienten erst durch langwierige und mühsame Montagearbeiten, wenn überhaupt möglich, umkonfiguriert werden. Dabei wird die Neigung der Schwingrinnen durch Lösen der diese am Schwingantrieb festlegenden Schrauben, Verkippen der Rinne und anschließendem Festziehen der Befestigungsschrauben verstellt. Diese Montagearbeiten zum Umkonfigurieren der Geräte auf Gegenstände mit anderen Reibungskoeffizienten sind aber mühsam und zeitaufwendig, was zur Folge hat, daß das Gerät über einen längeren Zeitraum für die Produktion ausfällt. Die vorbekannten Teilmengenwaagen sind somit im Hinblick auf die Anforderungen in der Produktion nicht flexibel genug zum Abfüllen unterschiedlicher Gegenstände einsetzbar.

US Patent 4,724,949 offenbart eine derartige Vorrichtung gemäβ den Oberbegriff des Anspruchs 1.

Angesichts dieser Probleme im Stand der Technik liegt der Erfindung die Aufgabe zugrunde, eine Vorrichtung der eingangs genannten Art bereitzustellen, die flexibel zum Abfüllen von Gegenständen mit unterschiedlichen Reibungskoeffizienten einsetzbar ist.

Erfindungsgemäß wird die Aufgabe durch die Vorrichtung des Anspruchs 1 gelöst.

Diese Erfindung beruht auf der Erkenntnis, daß die Neigung der Schwingrinne besonders schnell und ohne größeren Aufwand verstellbar ist, wenn die Schwingrinne an einem Widerlager durch ein manuell betätigbares Spannelement in verschiedenen Neigungen lösbar festspannbar ist. Dazu muss nur das Spannelement durch eine Handbetätigung geöffnet werden, die Schwingrinne in ihrer Neigung verstellt werden, und zuletzt die Schwingrinne wieder an dem Widerlager durch Schließen des Spannelements festgespannt werden. Diesen Vorgang kann ein Techniker innerhalb kürzester Zeit ausführen, woraufhin die Teilmengenwaage sofort wieder zum Abfüllen von Gegenständen mit einem anderen Reibungskoeffizienten einsetzbar ist. Damit wird der Produktionsausfall durch das Stillstehen der Maschine während der Umrüstung auf ein Mindestmass reduziert.

Als erfindungsgemäß vorteilhaft hat es sich erwiesen, wenn das Widerlager höhenverstellbar ist. Dies stellt konstruktionstechnisch eine besonders günstige Ausführung dar, da eine an einem Auflagepunkt in verschiedenen Höhenpositionen festgespannte Schwingrinne automatisch verschiedene Neigungen einnimmt, wenn ein zweiter Auflagepunkt der Schwingrinne in seiner Höhenstellung gleich bleibt.

In zweckmäßiger Ausführungsform weist das Widerlager einen, insbesondere zylindrischen Stift auf, welcher in einer sich im wesentlichen in vertikaler Richtung erstreckenden ersten Ausnehmung im Schwingrinnenträger, insbesondere in einem nach oben hin abstehenden Bereich des Schwingrinnenträgers, abgestützt ist. Weiterhin ist es vorteilhaft, wenn der Stift parallel zur Schwenkachse der Schwingrinne, um die die Schwingrinne beim Verstellen ihrer Neigung gedreht wird, ausgerichtet ist. Der in der ersten Ausnehmung durch einfaches vertikales Verschieben höhenverstellbare Stift stellt eine wirtschaftlich besonders günstige Ausführungsform eines höhenverstellbaren Widerlagers dar. Die Schwingrinne kann besonders gut gegen diesen Stift gespannt werden, wenn dieser parallel zur Schwenkachse der Schwingrinne ausgerichtet ist. Die Neigung der Schwingrinne hängt dabei von der vertikalen Position des Stiftes in der ersten Ausnehmung des Schwingrinnenträgers ab.

Zudem kann es vorteilhaft sein, wenn die Schwingrinne ein zu dem Widerlager komplementäres, zum Festspannen dienendes Anlageelement aufweist. Wird nun dieses Anlageelement gegen den Widerlagerstift gespannt, so ist die Schwingrinne in besonders stabiler Weise mit dem Schwingrinnenträger verbunden.

In einer besonders vorteilhaften Ausführungsform weist eine sich in vertikaler Richtung erstreckende Kante der ersten Ausnehmung mindestens zwei, jeweils zum Einrasten des Stiftes in verschiedenen Höhenpositionen geeignete Einbuchtungen auf. Damit wird zuerst einmal sichergestellt, daß die eingestellten Höhenpositionen des Widerlagers reproduzierbar sind, d.h., dass jedesmal wenn eine bestimmte Sollhöhenposition eingestellt wird, diese auch mit der Höhenposition einer vorhergehenden Einstellung übereinstimmt. Weiterhin verhindern die Einbuchtungen ein vertikales Verrutschen des Stiftes in der ersten Ausnehmung des Schwingrinnenträgers, sobald die Schwingrinne am Widerlager festgespannt ist.

Als erfindungsgemäß zweckmäßig hat es sich erwiesen, wenn der Schwingrinnenträger, insbesondere der abstehende Bereich des Schwingrinnenträgers, eine zur Abstützung des die Spannkraft einleitenden Zuggliedes des Spannelementes dienende zweite Ausnehmung aufweist. Diese zweite Ausnehmung weist vorzugsweise eine horizontale Begrenzung für das Zugglied in der der Begrenzungsrichtung der die Einbuchtungen aufweisenden Kante der ersten Ausnehmung entgegengesetzten Richtung auf. Diese zweite Ausnehmung ermöglicht ein Festspannen der Schwingrinne am Widerlager. Indem das Zugglied gegen die horizontale Begrenzung der zweiten Ausnehmung gespannt wird, wird das Anlageelement gegen den Widerlagerstift in Richtung auf die Ausbuchtungen in der ersten Ausnehmung des Schwingrinnenträgers gedrückt. Dadurch wird auch der Stift in die entsprechende Einbuchtung gedrückt und somit in seiner vertikalen Höhenposition festgespannt. Die Neigung der Schwingrinne ist somit nach erfolgtem Spannen des Zuggliedes des Spannelements gegen die horizontale Begrenzung der zweiten Ausnehmung festgelegt.

In einer erfindungsgemäß vorteilhaften Ausführungsform erstreckt sich die zweite Ausnehmung im wesentlichen in der Spannrichtung und mündet am oberen Rand des nach oben abstehenden Bereiches frei aus. Damit kann das Zugglied beim Lösen des Spannelements von der horizontalen Begrenzung der zweiten Ausnehmung weg nach oben hin aus dem nach oben hin abstehenden Bereich des Schwingrinnenträgers herausgenommen werden. Das wiederum ermöglicht ein Abnehmen der kompletten Schwingrinne vom Schwingrinnenträger. Vorzugsweise ist weist die zweite Ausnehmung nach oben hin eine vertikale Begrenzung auf, die an ihrem von der horizontalen Begrenzung wegführenden Ende als Spitze ausgeführt. Im Fall, in dem die abgenommene Schwingrinne auf dem Schwingrinnenträger aufgesetzt wird, erleichtert die Spitze das Einführen des Zuggliedes in die zweite Öffnung, da sie beim Zurückziehen des Zuggliedes auf die horizontale Begrenzung hin als Führungsschiene für das Zugglied dient.

Weiterhin hat es sich, als erfindungsgemäß zweckmäßig erwiesen, wenn die Schwingrinne ein sie auf dem freien Rand des nach oben abstehenden Bereichs abstützendes Auflager aufweist. Damit kann ein Teil des Gewichtes der Schwingrinne über das Auflager auf den Schwingrinnenträger übertragen und gleichzeitig die Belastung des Widerlagers in vertikaler Richtung verringert werden. Liegt das Auflager nahe dem Schwerpunkt der Schwingrinne, wird die Gewichtsbelastung des Widerlagers auf das kleinstmögliche Maß reduziert. Die Schwenkachse, um die die Schwingrinne beim Verstellen ihrer Neigung gedreht wird, verläuft durch dieses Auflager.

In einer erfindungsgemäß zweckmäßigen Ausführungsform Verlaüft die Spannstange parallel zer Schwingrinnenlängsachse und ist das Handbetätigungselement, ein mit der Spannstange gelenkig verbundener Hebelarm, dessen Drehpunkt an der Schwingrinne festgelegt ist. Mittels eines in dieser Form ausgeführten Spannelements ist es somit möglich, die Schwingrinne am Widerlager und somit am Schwingrinnenträger lösbar festzuspannen. Dabei wird der als Handbetätigungselement ausgeführte Hebelarm derart verschwenkt, daß sich das Zugglied an dem dem Handbetätigungselement entgegengesetzten Ende der Spannstange in der zweiten Ausnehmung des Schwingrinnenträgers in Spannrichtung bewegt. Beim Festziehen des Spannelements in der zweiten Ausnehmung wird somit die Schwingrinne gegen das Widerlager gespannt. Dabei wird der zylindrische Stift des Widerlagers in eine der Einbuchtungen der ersten Ausnehmung des Schwingrinnenträgers gedrückt, wodurch eine Verschiebung der Höhenposition des Stiftes innerhalb der ersten Ausnehmung unmöglich gemacht wird. Beim Lösen der Schwingrinne vom Schwingrinnenträger wird das Handbetätigungselement in die entgegengesetzte Richtung verschwenkt, wodurch die Spannstange so verschoben wird, daß dessen Zugglied sich von der Feslspannstellung in der zweiten Ausnehmung wegbewegt, wodurch der Anpreßdruck der Schwenkrinne gegen das Widerlager wegfällt und der Stift des Widerlagers in seiner Höhenposition verstellt werden kann.

Nachstehend wird die Erfindung unter Bezugnahme auf die Zeichnung, auf die hinsichtlich aller erfindungswesentlichen Einzelheiten ausdrücklich verwiesen wird, erläutert. In der Zeichnung zeigt:
- Fig. 1: eine Schwingrinne auf einer Vorrichtung zur Neigungsverstellung der Schwingrinne mit einem ein Spannelement aufweisenden Schwingrinnenträger, wobei die Schwingrinnenneigung 1° beträgt und das Spannelement geöffnet ist,
- Fig. 2: die Schwingrinne auf einer Vorrichtung zur Neigungsverstellung der Schwingrinne nach Fig. 1, bei der die Schwingrinnenneigung 1° beträgt und das Spannelement geschlossen ist,
- Fig. 3: die Schwingrinne auf einer Vorrichtung zur Neigungsverstellung der Schwingrinne nach Fig. 1, bei der die Schwingrinnenneigung 6° beträgt und das Spannelement geschlossen ist, sowie
- Fig.4: die Schwingrinne auf einer Vorrichtung zur Neigungsverstellung der Schwingrinne nach Fig. 1, bei der die Schwingrinnenneigung 11° beträgt und das Spannelement geschlossen ist.

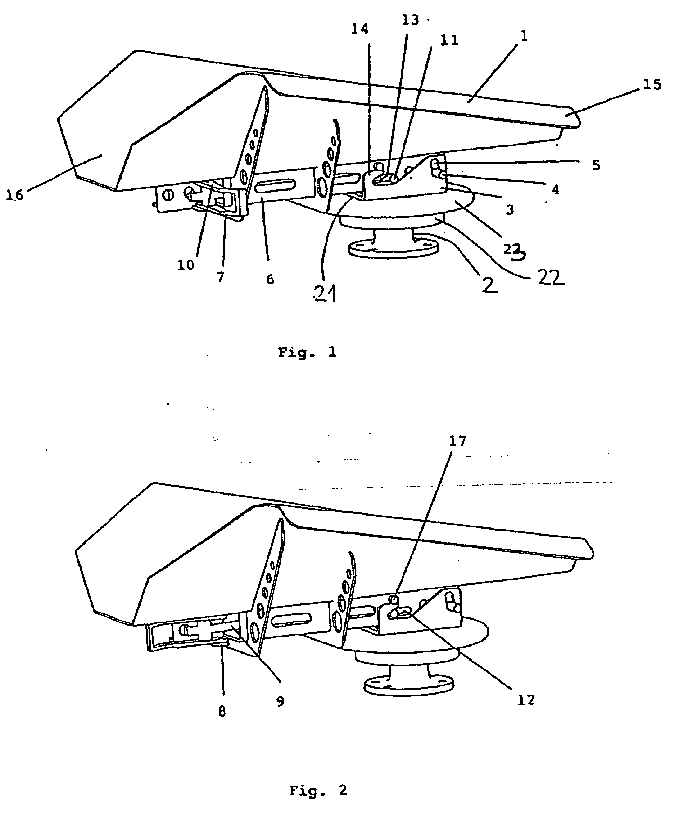

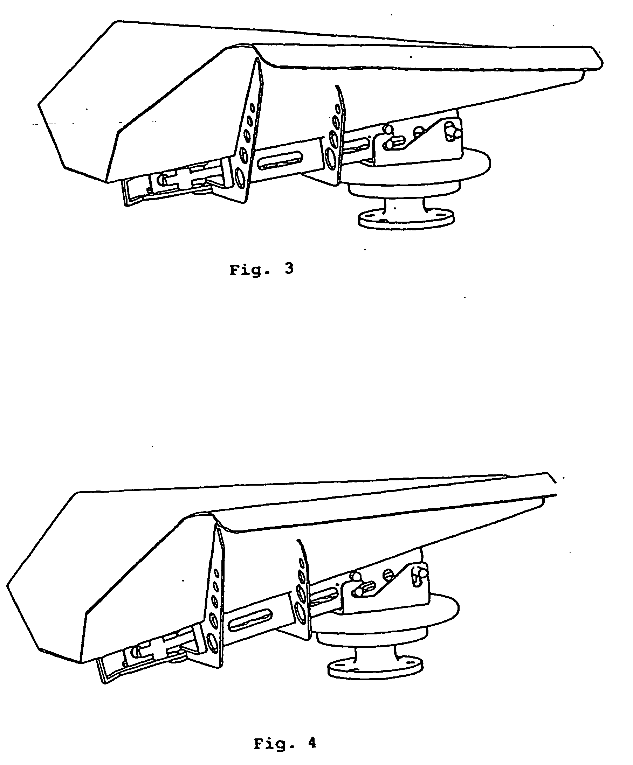

Eine Ausführungsform einer Vorrichtung zur Neigungsverstellung einer Schwingrinne wird anhand von Fig. 1 erläutert. Diese zeigt eine Schwingrinne 1 mit einem flachen Bodenstück und zwei nach oben gebogenen Seitenstücken. Die Rinne weist eine von rechts nach links abfallende leichte Neigung auf, was den Transport von am rechten Zuführende 15 der Schwingrinne 1 aufgenommenen Gegenständen hin zum linken Abgabeende 16 ermöglicht. In Förderrichtung, d.h. nach links hin, weitet sich die Schwingrinne 1 kontinuierlich auf. Die Schwingrinne 1 wird von einem Schwingrinnenträger 2 getragen, der mit seinem flanschförmigen unteren Teil mittels Schrauben auf einem Schwingantrieb befestigt werden. An seinem oberen Teil weist der Schwingrinnenträger 2 ein Schwingrinnenbefestigungselement 3 zur Befestigung der Schwingrinne auf. Dieses Schwingrinnenbefestigungselement 3 ist im Querschnitt U-förmig ausgebildet und weist zwei nach oben abstehende Seitenwände und einen die Seitenwände verbindenden U-Steg 21 auf. Der U-Steg 21 ist mittels Schraubbolzen (nicht dargestellt) auf einem oberen radialen Flansch 22 des Schwingrinnenträgers 2 festgespannt. Dazwischen ist eine kreisförmige elastische Membran 23 festgelegt, die zur Abdichtung gegenüber einem entsprechend geformten Gehäuserand einer mit der Schwingrinne ausgestatteten Teilmengenwaage oder sonstigen Vorrichtung dient, ohne die Schwingungsbewegung zu behindern. In die Seitenwände ist jeweils im dem Zuführende 15 der Schwingrinne 1 zugewandten Endbereich ein vertikales Langloch 5 zur Aufnahme eines als zylindrische Stange ausgeführten Widerlagerstiftes 4 angebracht. Dieses Langloch weist auf seiner dem Zuführende 15 der Schwingrinne 1 zugewandten rechten vertikalen Kante drei auf die Rundung des Widerlagerstiftes 4 abgestimmte Einbuchtungen auf. Der Widerlagerstift 4 kann somit in drei verschiedenen Höhenpositionen durch Andrücken an die die Einbuchtungen aufweisende Kante des Langlochs festgelegt werden. Figuren 1 und 2 zeigen den Widertagerstift 4 in der untersten Höhenposition, während der Stift in Fig. 3 die Mittellage und in Fig. 4 die obere Höhenposition einnimmt.

Damit der Widerlagerstift 4 sicher in seiner jeweils eingestellten Höhenposition verbleibt, sind auf seine beiden freien Enden in der Zeichnung nicht dargestellte Muttem aufgeschraubt, durch die auf die freien Enden aufgesetzte Tellerfedem gegen die Seitenwände gespannt werden. Durch die von den Tellerfedern zwischen dem Widerlagerstift 4 und den Seitenwänden hervorgerufene Andruckkraft wird der Widerlagerstift 4 sicher und dennoch verschiebbar höhenverschiebbar festgehalten.

Am flachen Bodenstück der Schwingrinne 1 ist von unten her ein Unterbau 6 der Schwingrinne befestigt. Dieser Unterbau 6 ist in Form einer Hohlröhre mit rechteckigem Querschnitt ausgeführt. Er erstreckt sich vom Bereich des Abgabeendes 16 der Schwingrinne 1 über etwa zwei Drittel der Länge der Schwingrinne, so daß in dem dem Zuführende 15 der Schwingrinne 1 zugewandten, etwa ein Drittel der Länge der Schwingrinne 1 ausmachenden Schwingrinnenteil kein Unterbau 6 angebracht ist. Am rechten Ende des Unterbaus 6 ist in den beiden vertikalen Seitenwänden jeweils eine halbkreisförmige Ausnehmung vorgesehen, die dazu geeignet ist, die Schwingrinne 1 gegen den Widerlagerstift 4 abzustützen. Der dem Abgabeende 16 der Schwingrinne 1 zugewandte linke Bereich des Unterbaus 6 ist ohne eine vordere Seitenwand und ohne ein Bodenstück ausgeführt. An der hinteren Seitenwand ist ein hebelartiges Handbetäfigunselement 7 über zwei auf einer Achse angeordnete Drehlager 8, wie in Fig. 2 gezeigt befestigt. In gewissem Abstand von der Drehachse der Drehlager 8 ist das Ende einer Zugstange 9 über ein Zugstangendrehlager 10 an dem Handbetätigungselement 7 festgelegt. Das Handbetätigungselement 7 kann wegen der Aussparung in der vorderen Seiten- und der Bodenwand des Unterbaus 6 von einer in Fig. 2 gezeigten geschlossenen Stellung, in der das Handbetätigungselement 7 an der hinteren Wand des Unterbaus 6 anliegt, bis zu einer in Fig. 1 gezeigten geöffneten Stellung um einen Winkel von 90° verschwenkt werden. Dabei wird die Zugstange 9 zusammen mit einer an ihrem anderen Ende in rechtem Winkel angebrachten, als Zugglied dienenden, Querstange 11 parallel zur Ausrichtung der Schwingrinne 1 verschoben. Die Querstange 11 tritt durch in den beiden Seitenwänden des Unterbaus 6 angebrachte längliche Öffnungen 12 nach außen aus.

Fig. 1 zeigt das das Handbetätigungselement 7, die Zugstange 9 und die Querstange 11 umfassende Spannelement in geöffneter Stellung. Die beiden Enden der Querstange 11 befinden sich dabei jeweils am Ansatz einer in jeder der beiden Seitenwände des Schwingrinnenbefestigungselementes 3 eingearbeiteten länglichen Ausnehmung 13. Diese längliche Ausnehmung 13 ist an der linken Seite sowohl horizontal als auch vertikal von einem hakenförmigen Begrenzungselement 14, welches am oberen Ende eine nach rechts weisende Spitze aufweist, begrenzt: Wird nun das Handbetätigungselement 7 in Richtung auf die in Fig. 2 gezeigte geschlossene Stellung verschwenkt, so wird die Querstange 11 in der länglichen Ausnehmung 13 bis zum Anschlag an das hakenförmige Begrenzungselement 14 zurückgezogen. Dabei wird die Schwingrinne 1 nach rechts gegen den Widerlagerstift 4 gedrückt, wodurch die Schwingrinne 1 als solche am Widerlagerstift 4 festgespannt wird. Das Gewicht der Schwingrinne wird dabei im wesentlichen über zwei knopfartige Auflager 17, welche von die Seitenwände des Unterbaus 6 oberhalb der länglichen Öffnungen 12 durchsetzenden freien Endbereiche eines durchgehenden Querbolzens gebildet sind, auf der Oberseite der hakenförmigen Begrenzungselemente 14 abgestützt.

Um die Neigung der Schwenkrinne von der in Fig. 2 gezeigten Stellung mit einer Neigung von 1° in die in Fig. 3 gezeigte Stellung mit einer Neigung von 6° oder die in Fig. 4 gezeigte Stellung mit einer Neigung von 11° zu verstellen, müssen die folgenden Schritte ausgeführt werden. Zuerst wird das Handbetätigungselement 7, wie in Fig. 1 gezeigt, nach vorne verschwenkt, wodurch die Querstange 11 von dem hakenförmigen Begrenzungselement 14 weg nach rechts geschoben wird. Daraufhin wird der Widerlagerstift 4 entweder in die in Fig. 3 gezeigte Stellung in der mittleren Einbuchtung oder in die in Fig. 4 gezeigte Stellung in der oberen Einbuchtung geschoben. Die auf dem Widerlagerstift 4 aufsitzende Schwenkrinne 1 wird dabei in ihrer Neigung entsprechend verstellt Schließlich muss nur noch das Handbetätigungselement 7 in die geschlossene Stellung zurückgeschwenkt werden, wodurch die Schwenkrinne 1 in der neigungsverstellten Stellung am Schwingrinnenträger 2 festgespannt wird. Dabei wird die Schwingrinne 1 gegen den Widerlagerstift in Richtung auf die Einbuchtungen im Langloch 5 gepreßt, wodurch auch der Widerlagerstift 4 in die entsprechende Einbuchtung gedrückt wird. Dadurch ist der Widerlagerstift 4 in seiner Höhenposition festgeklemmt.

## Patentansprüche

1. Vorrichtung zum Verstellen der Neigung einer von einem Schwingantrieb antreibbaren Schwingrinne (1), insbesondere für Teilmengenwaagen, mit einer Schwingrinne (1), einem an dem Schwingantrieb angeordneten Schwingrinnenträger (2) und einem Spannelement, durch das die Schwingrinne an einem Widerlager des Schwingrinnenträgers (2) In mindestens zwei verschiedenen Neigungen lösbar festspannbar ist, **dadurch gekennzeichnet, daß** das Spannelement ein sich am Schwingrinnenträger (2) abstützendes, die Spannkraft einleitendes Zugglied (11), eine damit verbundene Spannstange (9) und ein mit der Spannstange (9) gelenkig verbundenes Handbetätigungselement (7) aufweist, das zwischen einer dem Lösen der Schwingrinne (2) und dem am Widerlager Festspannen der Schwingrinne (2) dienenden Stellung manuell verschwenkbar ist.

2. Vorrichtung nach Anspruch 1, **dadurch gekennzeichnet, daß** das Widerlager höhenverstellbar ist.

3. Vorrichtung nach Anspruch 1 oder 2, **dadurch gekennzeichnet, daß** das Widerlager einen insbesondere zylindrischen Stift (5) aufweist, welcher in einer sich im wesentlichen in vertikaler Richtung erstreckenden ersten Ausnehmung (5) im Schwingrinnenträger (2), insbesondere in einem nach oben hin abstehenden Bereich (3) des Schwingrinnenträgers (2), abgestützt ist.

4. Vorrichtung nach Anspruch 3, **dadurch gekennzeichnet, daß** der Stift (4) parallel zur Schwenkachse der Schwingrinne (1), um die die Schwingrinne (1) beim Verstellen ihrer Neigung gedreht wird, ausgerichtet ist.

5. Vorrichtung nach einem der vorausgehenden Ansprüche, **dadurch gekennzeichnet, daß** die Schwingrinne (1) ein zu dem Widerlager komplementäres, zum Festspannen dienendes Anlageelement aufweist.

6. Vorrichtung nach einem der Ansprüche 3 bis 5, **dadurch gekennzeichnet, daß** eine sich in vertikaler Richtung erstreckende Kante der ersten Ausnehmung (5) mindestens zwei jeweils zum Einrasten des Stiftes (4) in verschiedenen Höhenpositionen geeignete Einbuchtungen aufweist

7. Vorrichtung nach einem der Ansprüche 3 bis 6, **dadurch gekennzeichnet, daß** der Schwingrinnenträger (2) insbesondere der abstehende Bereich des Schwingrinnenträgers (2), eine zur Abstützung des die Spannkraft einleitenden Zuggliedes (11) des Spannelementes dienende zweite Ausnehmung (13) aufweist.

8. Vorrichtung nach Anspruch 7, **dadurch gekennzeichnet, daß** die zweite Ausnehmung (13) sich im wesentlichen in der Spannrichtung erstreckt und am oberen Rand des nach oben abstehenden Bereiches frei ausmündet.

9. Vorrichtung nach einem der vorausgehenden Ansprüche, **dadurch gekennzeichnet, daß** die Schwingrinne (1) ein sie auf dem freien Rand des nach oben abstehenden Bereichs abstützendes Auflager (17) aufweist.

10. Vorrichtung nach einem der Ansprüche 7 bis 9, **dadurch gekennzeichnet, daß** die Spannstange (9) parallel zur Schwingrinnenlängsachse verläuft und das Handbetätigungselement (7) ein mit der Spannstange (9) gelenkig verbundener Hebelarm ist, dessen Drehpunkt an der Schwingrinne (2) festgelegt ist.

## Claims

1. Device for adjusting the inclination of a vibrating trough (1) which can be driven by a vibrating drive, in particular for partial-quantity weighing machines, said device having a vibrating trough (1), a vibrating-trough-carrier (2) which is disposed on the vibrating drive, and a clamping element by means of which the vibrating trough can be clamped fast, in a releasable manner, on an abutment on the vibrating-trough-carrier (2) in at least two different inclinations, **characterised in that** the clamping element has a tension member (11) which is supported on the vibrating-trough-carrier (2) and introduces the clamping force, a clamping bar (9) which is connected to said tension member, and a manual actuating element (7) which is connected to the clamping bar (9) in an articulated manner and can be swivelled manually between a position which serves to release the vibrating trough (1) and a position which serves to clamp said vibrating trough (1) fast on the abutment.

2. Device according to Claim 1, **characterised in that** the abutment is adjustable in height.

3. Device according to Claim 1 or 2, **characterised in that** the abutment has a pin (4) which is, in particular, cylindrical and is supported in a first clearance (5), which extends substantially in the vertical direction, in the vibrating-trough-carrier (2), and in particular in a region (3) of said vibrating-trough-carrier (2) that projects towards the top.

4. Device according to Claim 3, **characterised in that** the pin (4) is oriented parallel to the axis of pivoting of the vibrating trough (1), about which said vibrating trough (1) is rotated when its inclination is adjusted.

5. Device according to one of the preceding claims, **characterised in that** the vibrating trough (1) has a bearing element which is complementary to the abutment and is used for clamping-fast purposes.

6. Device according to one of Claims 3 to 5, **characterised in that** an edge, which extends in the vertical direction, of the first clearance (5) has at least two indentations which are suitable, in each case, for latching in the pin (4) in different positions in height.

7. Device according to one of Claims 3 to 6, **characterised in that** the vibrating-trough-carrier (2), in particular the projecting region of the latter, has a second clearance (13) which serves to support the tension member (11) of the clamping element, which tension member introduces the clamping force.

8. Device according to Claim 7, **characterised in that** the second clearance (13) extends substantially in the direction of clamping and opens out, in an unobstructed manner, at the upper rim of the upwardly projecting region.

9. Device according to one of the preceding claims, **characterised in that** the vibrating trough (1) has a support (17) which supports it on the unobstructed rim of the upwardly projecting region.

10. Device according to one of Claims 7 to 9, **characterised in that** the clamping bar (9) runs parallel to the longitudinal axis of the vibrating trough and the manual actuating element (7) is a lever arm which is connected to said clamping bar (9) in an articulated manner and whose fulcrum is fixed in position on the vibrating trough (1).

## Revendications

1. Dispositif destiné au réglage de l'inclinaison d'une goulotte vibrante (1) pouvant être entraînée par un entraînement vibratoire, notamment pour des balances de quantités partielles, comportant une goulotte vibrante (1), un support (2) de goulotte vibrante disposé sur l'entraînement vibratoire et un élément de serrage, par l'intermédiaire duquel la goulotte vibrante peut être bloquée de façon amovible sur une butée du support (2) de goulotte vibrante dans au moins deux inclinaisons différentes, **caractérisé en ce que** l'élément de serrage comporte un élément de traction (11) transmettant la force de serrage, qui prend appui sur le support (2) de goulotte vibrante, une barre de serrage (9) reliée à celui-ci, et un élément d'actionnement manuel (7) relié par articulation à la barre de serrage (9), qui peut être pivoté manuellement entre une position servant à la dissociation de la goulotte vibrante (2) et une position servant au serrage de la goulotte vibrante (2) sur la butée.

2. Dispositif selon la revendication 1, **caractérisé en ce que** la butée est réglable en hauteur.

3. Dispositif selon la revendication 1 ou 2, **caractérisé en ce que** la butée comporte une goupille (5) notamment cylindrique, qui prend appui dans un premier évidement (5), s'étendant sensiblement dans la direction verticale, pratiqué dans le support (2) de goulotte vibrante, notamment dans une zone (3) dépassant vers le haut du support (2) de goulotte vibrante.

4. Dispositif selon la revendication 3, **caractérisé en ce que** la goupille (4) est orientée parallèlement à l'axe de pivotement de la goulotte vibrante (1), autour duquel la goulotte vibrante (1) est tournée lors du réglage de son inclinaison.

5. Dispositif selon l'une des revendications précédentes, **caractérisé en ce que** la goulotte vibrante (1) comporte un élément d'appui complémentaire à la butée, servant au blocage.

6. Dispositif selon l'une des revendications 3 à 5, **caractérisé en ce qu'**un bord du premier évidement (5) s'étendant dans la direction verticale comporte au moins deux encoches appropriées pour l'enclenchement de la goupille (4) dans différentes positions en hauteur.

7. Dispositif selon l'une des revendications 3 à 6, **caractérisé en ce que** le support (2) de goulotte vibrante, notamment la zone dépassant du support (2) de goulotte vibrante, comporte un deuxième évidement (13) servant d'appui à l'élément de traction (11) transmettant la force de serrage de l'élément de serrage.

8. Dispositif selon la revendication 7, **caractérisé en ce que** le deuxième évidement (13) s'étend pour l'essentiel dans le sens du serrage, et débouche librement au niveau du bord supérieur de la zone dépassant vers le haut.

9. Dispositif selon l'une des revendications précédentes, **caractérisé en ce que** la goulotte vibrante (1) comporte un coussinet (17) qui prend appui sur le bord libre de la zone dépassant vers le haut.

10. Dispositif selon l'une des revendications 7 à 9, **caractérisé en ce que** la barre de serrage (9) s'étend parallèlement à l'axe longitudinal de la goulotte vibrante, et **en ce que** l'élément d'actionnement manuel (7) est un bras de levier relié par articulation à la barre de serrage (9), dont le point de rotation est défini sur la goulotte vibrante (2).
